# FASCICULE DE BREVET EUROPEEN

(11) **EP 2 661 390 B1**
(45) Date de publication et mention de la délivrance du brevet: **12.06.2019**
(21) Numéro de dépôt: 12702589.8
(22) Date de dépôt: 06.01.2012
(51) Int. Cl.: B62H 5/06, B62K 21/18

(54) **POTENCE POUR CINTRE DE VELO A LIBERATION CONTROLEE DE SON POUVOIR DIRECTIONNEL**
FAHRRADLENKROHR MIT KONTROLLIERTER FREIGABE VON DESSEN LENKBARKEIT
BICYCLE STEM HAVING CONTROLLED RELEASE OF THE STEERABILITY THEREOF

(30) Priorité: 06.01.2011 FR 1100039
(43) Date de publication de la demande: 13.11.2013
(73) Titulaire: Saga Bike, 17410 Saint-Martin-de-Re (FR)
(72) Inventeur: SAVARD, Franck Jean, F-17410 Saint-Martin-de-Re (FR)
(74) Mandataire: Aquinov
(86) Numéro de dépôt international: PCT/FR2012/050039
(87) Numéro de publication internationale: WO 2012/093237

(56) Documents cités:
- EP-A1- 2 052 954
- WO-A1-98/10977
- WO-A1-03/055738
- WO-A2-2004/074076
- JP-A- 2001 130 463
- US-A- 2 139 984
- US-A- 5 085 063

## Description

La présente invention concerne une potence pour cintre de vélo à libération contrôlée de son pouvoir directionnel.

Un vélo comporte sur l'avant un agencement commun comprenant une fourche, une douille de direction solidaire du cadre du vélo avec des roulements, une potence solidaire de la fourche et un cintre ou guidon solidaire de la potence, manoeuvrable par l'utilisateur.

Il existe deux montages de la fourche dans le support de direction :
- un montage dit classique plutôt réservé aux vélos dits de ville ou VTC (vélo tous chemins). Ce montage comprend une fourche avec un tube qui traverse la douille, ledit tube recevant un mât solidaire de la potence qui comporte des moyens de blocage dudit mât dans ledit tube, ces moyens de blocage étant pour la majorité un noyau en biseau manoeuvré par une vis de traction montée libre dans ladite potence. Ainsi on introduit le mât dans le tube, on visse ce qui a pour effet de solidariser ledit mât avec ledit tube. L'utilisateur peut alors manoeuvrer le cintre et la fourche supportant la roue qui est ainsi devenue solidaire en translation et en rotation .
- Un montage dit Ahead Set, réservé plus spécialement aux VTT (Vélos Tous Terrains). Ce montage consiste à introduire dans le tube de fourche un coin sous forme d'une rondelle épaisse qui est crénelée ou en "branches de sapin" et qui coopère soit directement avec la paroi interne du tube de fourche soit avec des cannelures ménagées dans le tube de fourche si bien que cette rondelle est immobilisée en rotation. Cette rondelle est ainsi immobilisée en translation et en rotation.

La potence selon la présente invention vise à répondre à un double objectif, celui de permettre un rangement du vélo et de réaliser une fonction antivol.

Pour le rangement, on sait que soit dans un parking, soit au domicile, soit encore dans un lieu de rangement ou sur des moyens de transport rapportés sur une voiture par exemple, le guidon engendre un besoin de place important sans rapport avec la largeur très limitée d'un vélo.

De fait, il serait intéressant de pouvoir faire pivoter le guidon pour le positionner dans le plan du cadre du vélo, ce qui limiterait fortement l'encombrement.

De plus, on sait aussi que si le guidon est laissé fou par rapport à la fourche ou si le guidon est bloqué dans cette configuration le vélo est inutilisable sauf à faire des modifications mécaniques en atelier. Ce guidon fou ou bloqué dans la configuration coplanaire peut donc constituer un agencement antivol tout à fait suffisant.

De nombreux brevets ont proposé des solutions pour arriver à de tels résultats. On connaît notamment les brevets français FR 2 874 366 et FR 2 948 089 qui proposent des agencements évolués en ce sens qu'ils sont automatiques avec déverrouillage manuel et encliquetage automatique.

Il se trouve que si ces dispositifs répondent sur les fondamentaux, ils laissent, pour l'agencement décrit dans la première demande de brevet FR 2 874 366, un jeu certain entre les moyens de blocage et le cintre, ce qui rend la conduite un peu flou et confère à l'utilisateur un sentiment d'insécurité, non satisfaisant. Dans le cas de la seconde demande FR 2 948 089, l'agencement requiert là aussi une très grande précision à la fabrication pour limiter les jeux mais si les pions doivent pouvoir se mettre en place aisément, il faut laisser un jeu et on se retrouve avec les mêmes désagréments que précédemment, les solutions étant antinomiques.

Le document JP 2001 130463 A montre le préambule de la revendication 1.

Le but de la présente invention est de proposer un agencement qui réponde aux mêmes problématiques que précédemment mais dans lequel les jeux sont compensés et qui est totalement intégré dans la potence.

Le dispositif selon la présente invention couvre les deux types de montage dits classique et ahead set.

L'invention est maintenant décrite en détail suivant un mode de réalisation particulier, non limitatif, en regard des dessins annexés sur lesquels les différentes figures représentent :
- Figure 1 : une vue éclatée en perspective d'une potence selon la présente invention, dans un montage classique avec un mât à blocage par coin sur la fourche,
- Figure 2 : une vue montée de la potence de la figure 1,
- Figure 3 : une vue en coupe longitudinale de la potence de la figure 1,
- Figure 4 : une vue en coupe transversale au droit des moyens de verrouillage/déverrouillage,

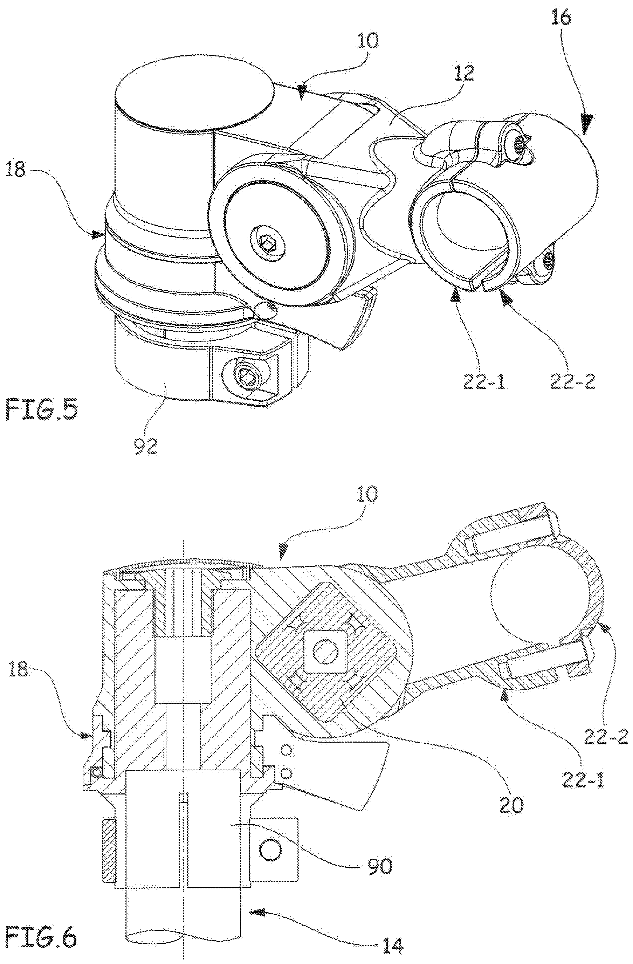

- Figure 5 : une vue d'une variante des moyens de fixation de la potence selon la présente invention sur la fourche,
- Figure 6 : une vue en coupe de la variante des moyens de fixation de la potence de la figure 5,

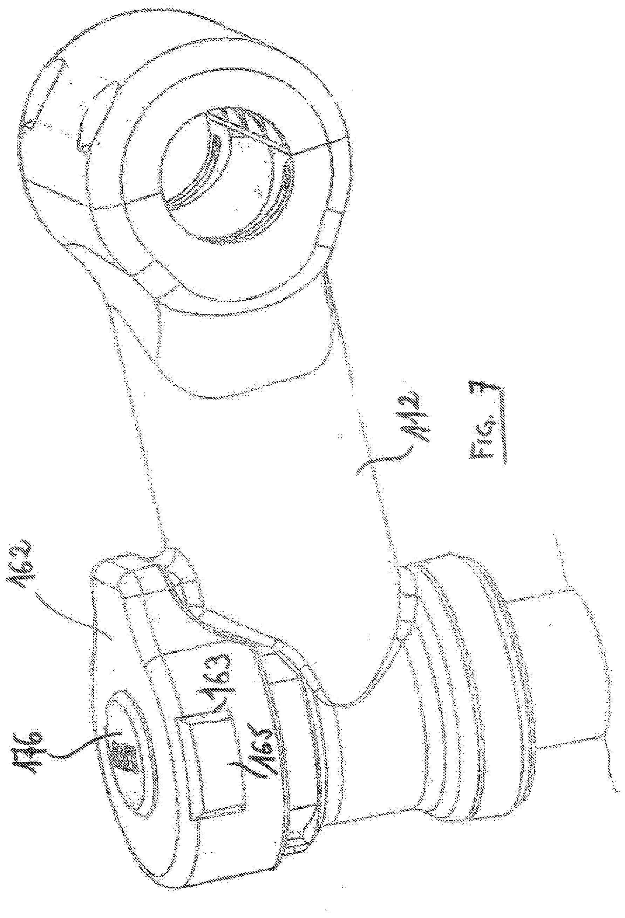

- Figure 7 : une vue assemblée du montage d'une potence selon la présente invention, dans un montage dit ahead set sur la fourche,
- Figure 8 : une vue éclatée partiellement de la potence de la figure 7 avec le bras de potence en trait mixte,
- Figure 9 : une vue éclatée avec le capot en place et la tête de potence retirée,
- Figure 10 : une vue éclatée en perspective faisant apparaître les clavettes.

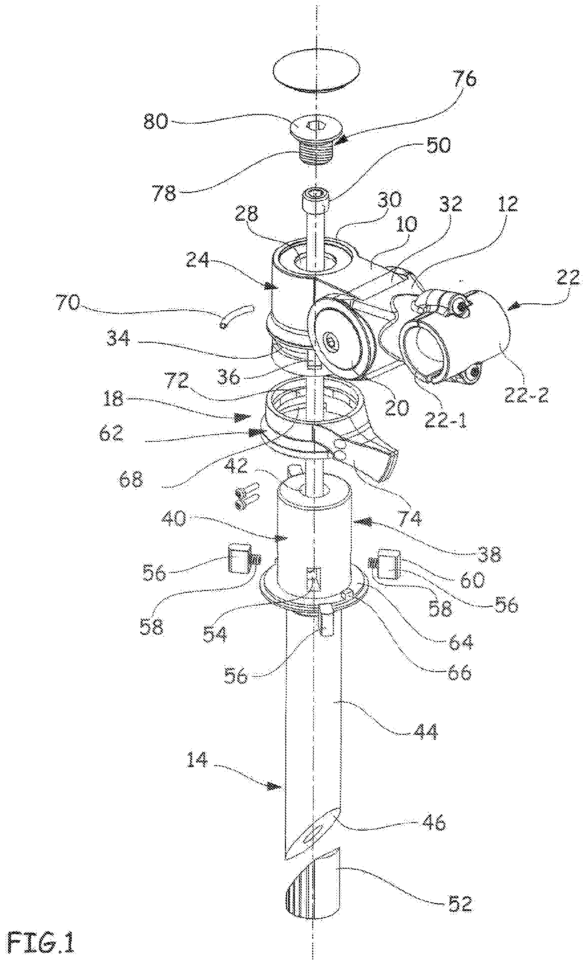

Sur la figure 1, on a représenté une potence avec un montage classique qui comprend une potence 10, un bras 12 de potence destinée à recevoir un cintre (non représenté), des moyens 14 de de fixation de la potence 10 sur le tube 16 de fourche avec des moyens 18 de verrouillage/déverrouillage intégrés.

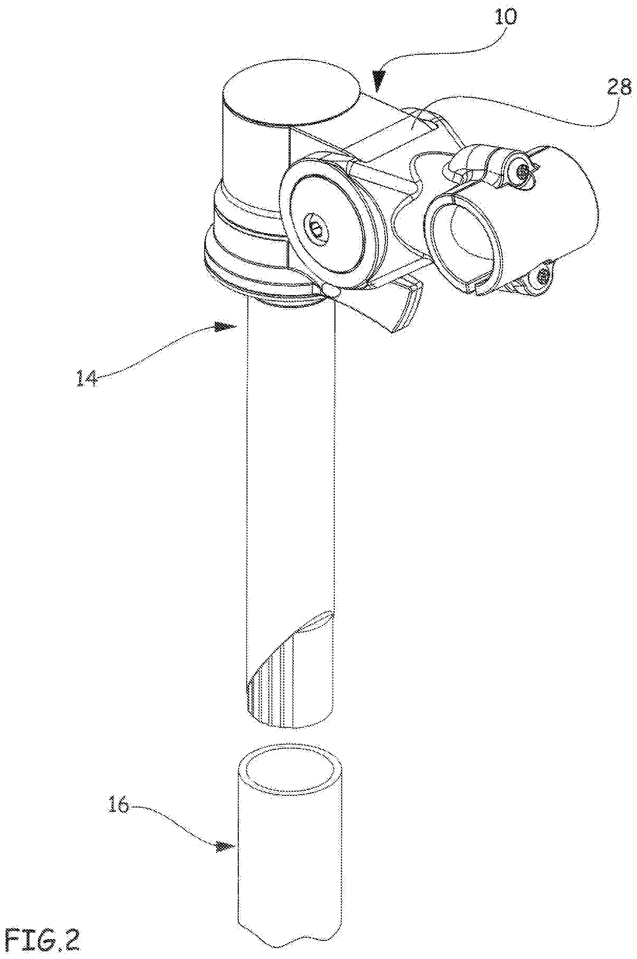

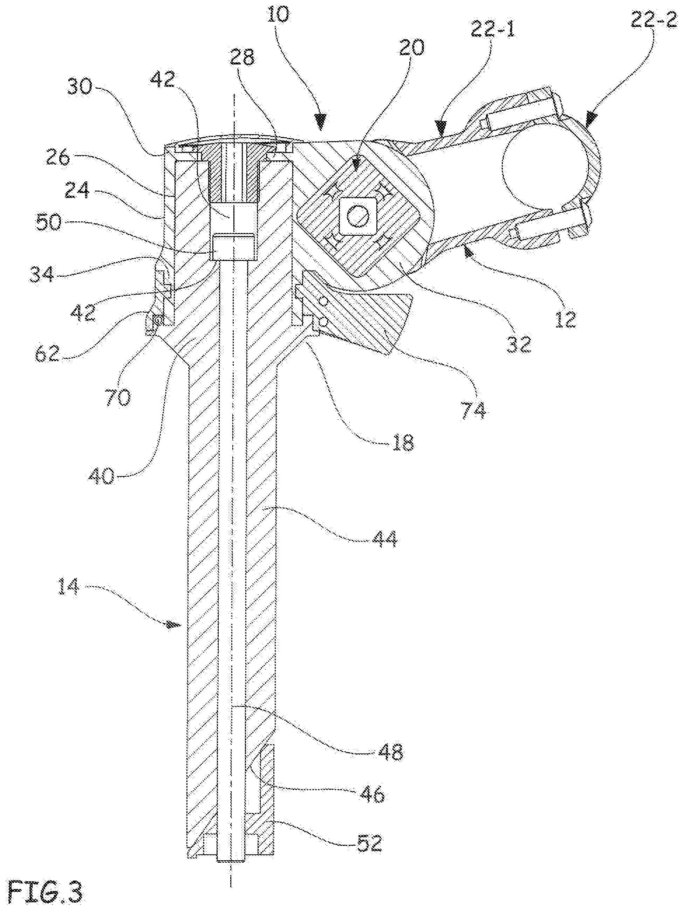

On se reporte indifféremment aux figures 1-4 pour la description détaillée qui va suivre.

Le bras 12 de potence est équipé à son extrémité distale de moyens 22 de fixation d'un cintre avec deux demi-coquilles 22-1, 22-2 de façon connue.

Dans l'agencement représenté, il est prévu à l'extrémité proximale dudit bras des moyens 20 de réglage en inclinaison et d'amortissement qui n'ont pas à être décrits dans le détail car disponibles dans le commerce.

La potence 10 comprend un corps 24 de potence formant douille avec un logement 26 cylindrique intérieur borgne. Ce logement 26 cylindrique est muni d'un trou 28 dans sa partie supérieure. De même, une collerette 30 de faible hauteur est prévue en partie supérieure pour générer une dépression.

Ce corps 24 de potence se prolonge par une protubérance 32 destinée à recevoir le bras 12 de potence et venue de fabrication avec le corps 24 de potence de façon à constituer une pièce monolithique.

En partie inférieure, le corps 24 de potence reçoit une rainure 34 périphérique et des lumières 36, en l'occurrence quatre lumières 36, orientées radialement pour donner la direction générale.

La potence 10 comprend également une embase 38 qui comprend une tête 40 avec des moyens de fixation 14 sur le tube 16 de fourche et des moyens 18 de verrouillage /déverrouillage.

Dans ce mode réalisation avec un blocage par coin, la tête 40 est de forme cylindrique extérieurement et pleine intérieurement, avec un trou 42 traversant, coaxial avec le trou 28 du corps 24 mais d'un diamètre inférieur audit trou 28. Ce trou 42 est taraudé.

Cette tête 40 de potence se prolonge vers la partie inférieure par un mât 44 de blocage, le trou traversant 42 se prolongeant à travers ce mât 44 de blocage avec un sur alésage permettant de générer une portée.

Ce mât 44 de blocage présente une extrémité 46 en forme de biseau.

Une vis 48 vient en appui par sa tête 50 sur le sur alésage ménagé dans le trou 42 et passe à travers le trou 28 référencé ci-avant pour déboucher librement de l'extrémité 46 en forme de biseau.

Cette vis 48 visse dans un taraudage ménagé dans un coin 52 dont la partie supérieure est en forme de biseau également de façon à coopérer à glissement sur l'extrémité 46 en forme de biseau.

La tête 40 porte les moyens 18 de verrouillage/déverrouillage qui comprennent au moins un logement 54 borgne en l'occurrence quatre logements 54 ménagés dans ladite tête.

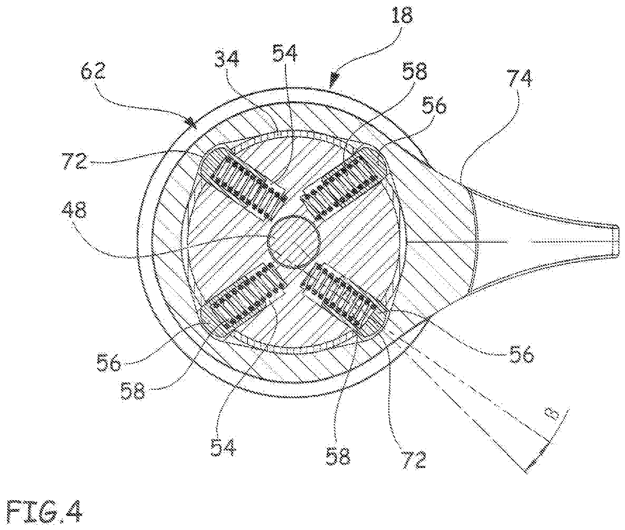

Ces logements 54 borgnes sont orientés de façon sensiblement radiale pour la direction générale mais en réalité chaque logement 54 borgne fait un angle β avec la direction strictement radiale comme cela est bien visible sur la figure 4. Chaque logement 54 borgne reçoit une clavette 56, un ressort 58 de rappel étant interposé entre chaque clavette et le fond du logement borgne de sorte à rappeler la clavette vers l'extérieur de son logement.

Chaque clavette 56 est de forme préférentiellement parallélépipédique avec une grande dimension suivant l'axe longitudinal correspondant à celui de l'axe de rotation de la direction et chaque clavette 56 comporte deux chanfreins 60 sur les arêtes en saillie du logement, également suivant ce même axe longitudinal. En lieu et place des chanfreins, la clavette peut aussi présenter une tête bombée, ce qui est purement et strictement équivalent comme cela sera montré au cours de la description du fonctionnement qui va suivre.

Les moyens 18 de verrouillage/déverrouillage comprennent en outre une bague 62 de manoeuvre et d'actionnement.

Cette bague 62 est mobile en rotation autour du corps 24 de potence et vient en appui sur une collerette 64 ménagée à la périphérie de la tête 40. Cette collerette 64 porte de plus une butée 66.

La bague 62 mobile en rotation est avantageusement fendue pour en permettre le montage, des vis assurant le serrage mécanique, à frottement doux après montage sur la partie inférieure de la tête 40 de potence, au droit de la rainure. La bague 62 porte elle-même une rainure 68 partiellement circonférentielle, destinée à recevoir un jonc 70 en élastomère adapté pour exercer un effort de rappel élastique en rotation par mise en contrainte contre la butée 66 comme il sera expliqué ultérieurement, lorsque la bague est manoeuvrée en rotation.

Par ailleurs, cette bague 62 porte sur sa face intérieure des ressauts 72, de forme convexe, disposés chacun en regard d'un logement 54 et donc d'une clavette 56 correspondante lorsque la bague est en position neutre de blocage. Ainsi dans le mode de réalisation représenté avec quatre logements 54 et quatre clavettes 56, la bague dispose de quatre ressauts 72.

Lorsque la bague 62 est tournée, la paroi intérieure de la bague 62, entre les ressauts, repousse les clavettes 56, cette paroi intérieure étant montée à frottement doux autour de la partie inférieure de la tête 40 de potence, au droit de la rainure 34.

Les clavettes viennent donc affleurer à la surface du corps de potence.

La bague 62 est mobile en rotation ajustée sur un secteur d'arc limité par le jonc 70 en élastomère de rappel.

La bague 62 est munie d'un levier 74 de manoeuvre, actionnable manuellement, orientée radialement, venu de fabrication avec la bague et donc monolithique. De façon avantageuse, le plan de joint de la bague fendue est disposé dans le plan médian de ce levier 74 et les vis de serrage mécanique sont disposées en pied de levier qui comporte une masse suffisante de matière.

L'ensemble du montage est complété par une vis 76 dont le corps 78 fileté est apte à coopérer avec le taraudage du trou 42 et dont la tête 80 est apte à venir en appui sur le corps 24 de potence de sorte à pouvoir solidariser en translation le corps 24 de potence avec la tête 40 de potence.

Le montage du dispositif est maintenant décrit dans un premier type de montage dit classique à montage à mât et coin.

Tout d'abord; le montage de la potence destinée à recevoir un cintre selon la présente invention est réalisé par la succession des étapes qui vont suivre, sachant que, pour le produit industriel et commercial, ce montage sera effectué en usine et la potence sera prête à monter sur le cadre.

La première étape consiste à introduire les clavettes 56 équipées de leurs ressorts, en l'occurrence les quatre clavettes dans leurs logements, les ressorts n'étant pas comprimés et les clavettes restant en saillie.

Le jonc 70 en élastomère, de préférence conformé en arc, est positionné sur la collerette 64.

Le corps 24 de potence est introduit dans la bague 62 par sa partie inférieure, de sorte que la rainure 34 et les fenêtres 36 qu'elle porte, viennent au droit de de la partie intérieure de la bague 62, les ressauts 72 se trouvant dans le même plan horizontal que les fenêtres 36.

Cet ensemble prémonté est introduit en partie supérieure de la tête 40 de potence. Lors de l'introduction du corps 24 de potence autour de la tête 40, par le dessus, les clavettes 56 sont repoussées totalement dans leurs logements repectifs, en comprimant les ressorts 58.

Les vis de serrage mécanique de la bague sont alors serrées, ce qui a pour effet de lier les trois pièces tête 40, bague 62 et corps 24 de potence.

L'ensemble est alors mis en place sur le tube 16 de fourche.

Le mât 44 de blocage est introduit à travers la douille de direction du cadre du vélo (non représentée), ceci de façon connue et pénètre dans le tube 16 de fourche jusqu'à ce que la collerette 64 vienne en appui sur ladite douille généralement.

La vis 48 est en place et coopère avec le coin 52.

L'utilisateur visse la vis 48, ce qui a pour effet de tirer sur le coin 52 qui, par l'agencement des deux surfaces en vis à vis en biseau, se déplace et s'excentre ce qui a pour résultat d'immobiliser ledit coin et le mât 44 dans le tube 16 de fourche.

Il convient ensuite de visser la vis 76 dans le trou 42 fileté dont la tête 80 vient porter sur le corps 24 de potence et qui le solidarise mécaniquement de façon définitive à la tête et au mât. On note que le dessin de la figure 1 montre un cache de finition et de propreté qui évite la pénétration d'eau et de poussières. Dès lors, l'utilisateur peut assurer le montage du bras 12 de potence et du cintre, le bras 12 ayant pu être laissé en place dès le début du montage de la potence selon la présente invention dans le tube 16 de fourche.

L'utilisateur dispose alors de la potence selon la présente invention, montée sur le cadre.

Dès que l'utilisateur va actionner en rotation la potence, si cela n'est pas déjà le cas, les clavettes 56, poussées par les ressorts, vont faire saillie partielle dès que les fenêtres 36 seront en face des logements 54.

Lorsque le cintre est orienté en position pilotage, le montage de la bague 62 est prévu pour que les ressauts 72 soient également en face des clavettes 56, permettant de verrouiller la rotation du corps 24 de potence par rapport à la tête 40 de potence.

On note que les clavettes se déplacent suivant une droite qui est inclinée d'un angle β par rapport à un rayon, excentrée, ce qui conduit à un rattrapage de jeu automatique car chaque clavette se déplace plus ou moins loin dans le ressaut correspondant et qu'il y a arc-boutement.

Le pilotage reste donc d'une grande précision comme dans le cas d'un agencement sans moyens de verrouillage/déverrouillage.

Lorsque l'utilisateur souhaite positionner son cintre sensiblement dans le plan du cadre du vélo il lui suffit de déplacer en rotation le levier 74 et la bague 62 qui en est solidaire. La bague 62 tourne par rapport à l'ensemble corps 24 de potence et tête 40 de potence. La bague 62 par sa piste intérieure repousse les clavettes 56 dans leurs logements 54, à travers les lumières 36.

Les clavettes se retrouvent à venir affleurer la surface extérieure de la tête 24 de potence.

Les clavettes 56 étant munies chacune d'un chanfrein 60, il est possible de provoquer un escamotage supplémentaire de chaque clavette car le bord de chaque lumière 36 vient en appui sur le chanfrein 60 en amont du sens de rotation et la rotation du corps 24 de potence provoque le déplacement en translation vers son logement 54 de chaque clavette 56, à l'encontre de l'effort de rappel élastique de leur ressort 58.

L'utilisateur doit faire un léger effort qui permet de créer un point dur très aisément surmontable mais qui permet de bien ressentir le débrayage avec un effet "clic".

Le corps 24 de potence se trouve alors libre par rapport à la tête 40 de potence fixe par rapport au cadre.

Le cintre solidaire du bras 12 lui-même solidaire du corps 24 de potence peut alors être orienté sensiblement dans le plan du cadre.

Dans l'agencement représenté, les clavettes 56 vont se retrouver de nouveau au droit des fenêtres 36, avec un décalage de 90° et ces clavettes vont assurer de nouveau le blocage en rotation du corps 24 de potence par rapport à la tête 40 de potence, en passant à travers lesdites fenêtres 36 et en venant dans les ressauts 72 en vis-à-vis.

On constate aussi que du fait de l'agencement des logements 54 dont l'axe longitudinal ne passe pas par l'axe central, l'angle β conduit à une annulation du jeu des clavettes dans lesdits logements et lors de leur passage à travers les fenêtres 36 car elles se trouvent disposées en biais.

La conduite lorsque le cintre est perpendiculaire au plan du cadre est d'une grande précision du fait de cette annulation des jeux et devient donc très confortable pour l'utilisateur.

La potence selon la présente invention peut aussi être montée sur le tube de fourche avec une bague 90 fendue intégrée et un collier 92 de serrage. Dans ce cas, le corps 24 de potence reste inchangé et la tête 40 de potence ne possède que la bague 90 intégrée, sans mât et sans coin.

De ce fait, le tube de fourche 16 de fourche est introduit dans la bague fendue et le collier 92 assure le serrage de cette bague fendue si bien que l'ensemble est également solidarisé en translation et en rotation.

Cette variante de montage n'affecte aucunement la potence en elle-même et les moyens de verrouillage/déverrouillage associés et apporte une autre solution de montage sur le tube de fourche uniquement.

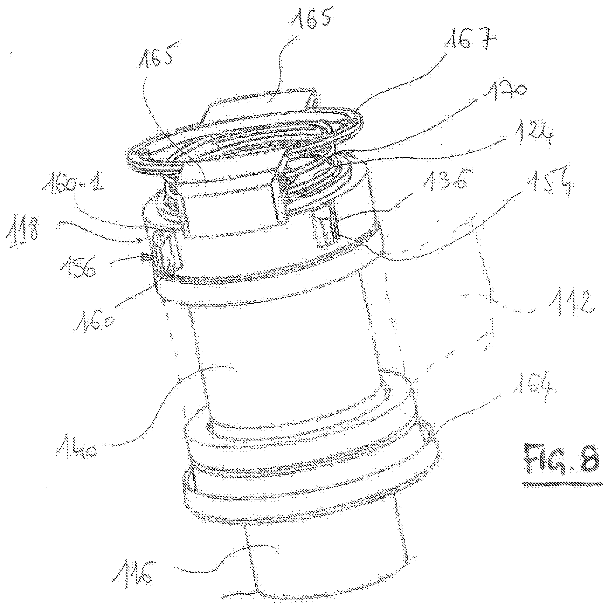

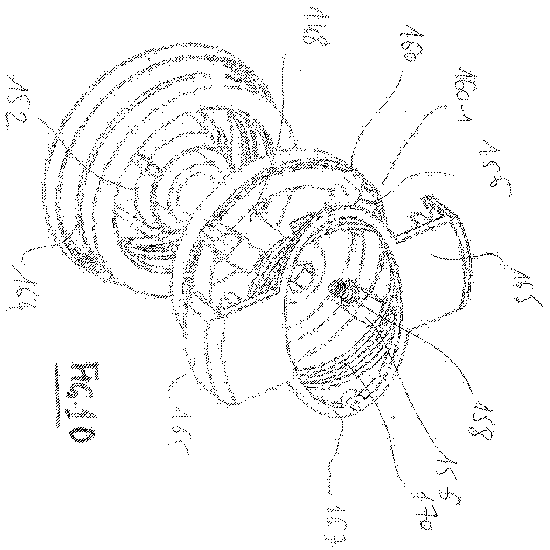

Sur les figures 8, 9, 10 et 11, on a représenté un montage ahead set de la potence selon la présente invention sur une fourche avant de vélo.

Dans cet agencement, les références aux éléments identiques ou à fonctions identiques sont mentionnées en ajoutant 100 à chacune desdites références par rapport au premier jeu de figures.

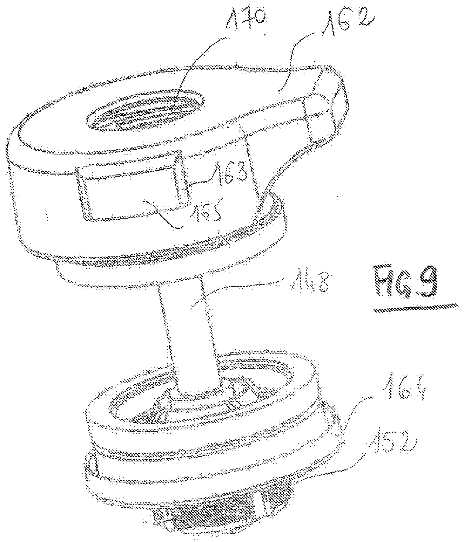

La bras 112 de potence est fixé sur le corps 140 de potence, visible sur la figure 9.

La tête 124 de potence est de forme cylindrique et porte des moyens de verrouillage/déverrouillage 118 comme précédemment des clavettes 156 disposées dans des logements 154 et poussées vers l'extérieur desdits logements 154 par des ressorts 158 de rappel élastique. De façon symétrique, il est aussi prévu quatre clavettes dans cet agencement.

Les logements 154 sont également chacun avec un axe longitudinal ne passant pas par l'axe longitudinal central, excentré.

Les clavettes 156 comprennent des chanfreins 160 sur leurs arêtes longitudinales c'est-à-dire verticales ou présentent un profil arrondi, comme précédemment.

Les clavettes 156 de ce mode de réalisation comprennent une particularité supplémentaire, celle de disposer d'un chanfrein 160-1 sur la partie supérieure. Un noyau 152 est fixé dans le tube de fourche et reçoit une vis 148 pour assurer le serrage de l'empilage des différents éléments tête 140 et corps 124 de potence ainsi des bagues et autres roulements référencés globalement 164. C'est le montage ahead set.

La tête 140 reçoit le bras 112 de potence comme montré sur la figure 8.

Un capot 162 supérieur est mobile en translation verticale et reçoit un élément 170 de rappel élastique vertical, en l'occurrence un ressort hélicoïdal.

Ce capot 162 comporte des moyens de sécurité, en l'occurrence deux fenêtres 163 à travers lesquelles passent deux boutons poussoirs 165, ceci n'étant qu'un mode préférentiel de réalisation, de préférence disposés diamétralement. Ces deux boutons poussoirs 165 sont reliés par un anneau déformable 167 qui assure la mise en saillie desdits boutons poussoirs.

Des butées 169 solidaires du bouton poussoir, schématisées sur les figures, interdisent la manoeuvre en translation verticale, du fait de l'effort de rappel élastique de l'anneau déformable et autorisent le déplacement en translation verticale lorsque les boutons poussoirs sont radialement rapprochés.

Le capot 162 est également muni d'un chanfrein périphérique qui vient au droit des clavettes 156 et plus particulièrement au droit des chanfreins 160-1 desdites clavettes.

Le montage est donc le suivant.

Le tube 116 de fourche traverse la douille du cadre du vélo et s'emboîte dans le corps 124 de potence. La vis 148 est vissée et assure l'immobilisation en translation verticale de cet ensemble et la compression pour supprimer tout jeu vertical et permettre, de façon connue, aux roulements et bagues de jouer leur rôle.

Les clavettes 156 sont en place dans leurs logements 154.

Le bras 112 de potence est rapporté sur la tête 140 de potence préalablement au montage de ladite tête, même s'il n'est pas serré et immobilisé en rotation.

La tête 140 de potence est alors emboîtée et les lumières 136 laissent passer les clavettes 156, une fois ladite tête 140 mise en place et orientée de façon adaptée.

Le ressort 170 est positionné et le capot 162 également avec ses boutons poussoirs 165. Une vis 176 assure la solidarisation du capot au corps 124 de potence.

Le fonctionnement est donc identique à la variante avec un montage classique à mât et coin, la différence venant de l'actionnement.

En effet, l'utilisateur lorsqu'il souhaite mettre son cintre et donc sa potence dans le plan du cadre du vélo appuie sur les boutons poussoirs 165 à l'encontre des forces de rappel élastique de l'anneau déformable 167.

L'utilisateur peut alors appuyer sur le capot 162 et le déplacer en translation verticale à l'encontre de l'effort élastique de rappel du ressort 170.

Ce mouvement de translation du capot 162 provoque l'escamotage des clavettes 156 dans leurs logements 154 dans le corps 124 de potence par appui sur les chanfreins 160-1 supérieurs desdites clavettes.

L'utilisateur par une action sur le cintre et donc sur la potence 112 provoque la rotation de la tête 140 de potence et les chanfreins 160 des clavettes ou les formes arrondies créent un point dur, surmonté avec un très faible effort grâce au bras de levier du cintre, ce qui constitue un petit "clic" de manoeuvre.

Dès que l'utilisateur a effectué une rotation de 90°, les clavettes 156 reprennent place à travers les lumières 136 et solidarisent en rotation la tête 140 et le corps 124 de potence donc solidarisent la roue et le cintre.

Il est possible de profiter de ce capot 162 pour intégrer des équipements complémentaires comme des accessoires électroniques.

Il est aussi possible d'adjoindre une serrure pour immobiliser la potence dans la position de rangement, ce qui rend plus difficile la conduite du vélo et qui joue donc le rôle d'antivol.

Dans ce montage ahead set, on note de nouveau la disparition des jeux de fonctionnement ce qui permet un pilotage précis avec une sensation de sécurité sans que cela ne perturbe le fonctionnement pour l'utilisateur.

De plus les pièces peuvent être réalisées pour l'essentiel en matériau composite de façon à alléger les composants et conférer des formes esthétiques attractives.

La potence pour cintre de vélo à libération contrôlée de son pouvoir directionnel selon la présente invention permet les deux fonctions rangement et antivol moyennant l'apposition d'une serrure tout en supprimant les jeux.

## Revendications

1. Potence (10) pour cintre de vélo à libération contrôlée de son pouvoir directionnel autour de l'axe de rotation de la direction, comprenant un corps (24,124) destiné à recevoir un bras (12,112) de potence recevant lui-même un cintre, ladite potence comprenant en outre une tête (40,140) de potence, des moyens (14,114) de fixation de ladite potence (10) sur le tube de fourche (16,116) d'un vélo comprenant une douille de direction et des moyens (18,118) de verrouillage/déverrouillage, où ces moyens de verrouillage/déverrouillage (18,118) comprennent au moins une clavette (56,156) disposée dans un logement (54,154) ménagé dans la tête (40,140) de potence, ledit logement étant ménagé avec un axe longitudinal excentré par rapport à l'axe longitudinal de rotation de la direction, **caractérisée en ce que** ces moyens de verouillage/déverrouillage comprennent des moyens (58,158) de rappel élastique de cette au moins une clavette vers l'extérieur dudit logement, au moins une lumière (36,136) ménagée dans le corps (24,124) de potence, orientée radialement par rapport à l'axe longitudinal de rotation, la au moins une clavette passant à travers la au moins une lumière, une bague (62) ou un capot (162) permettant d'escamoter la au moins une clavette (56,156) à travers la au moins une dite lumière (36,136) par un mouvement respectivement de rotation ou de translation.

2. Potence (10) pour cintre de vélo selon la revendication 1, **caractérisée en ce que** les logements (54,154) sont au nombre de quatre.

3. Potence (10) pour cintre de vélo selon la revendication 1 ou 2, **caractérisée en ce que** la tête (40) de potence comporte un mât (44) et un coin (52) avec une vis (48) pour sa fixation dans le tube (16) de fourche.

4. Potence (10) pour cintre de vélo selon la revendication 1 ou 2 **caractérisée en ce que** la tête (140) comprend un noyau (152) avec une vis (148) pour sa fixation dans le tube (116) de fourche.

5. Potence (10) pour cintre de vélo selon l'une des revendication 1 à 3, **caractérisée en ce que** la bague (62) comporte des ressauts (72) destinés à recevoir les clavettes (56) dans certaines positions angulaires données.

6. Potence (10) pour cintre de vélo selon l'une des revendication 1 à 3 et 5, **caractérisée en ce que** la bague (62) comporte une rainure (68) partiellement circonférentielle destinée à recevoir un élément (70) élastique de rappel tel qu'un jonc en élastomère.

7. Potence (10) pour cintre de vélo selon l'une des revendication 1 à 3, 5 et 6, **caractérisée en ce que** la bague (62) comporte un levier (74) de manoeuvre, actionnable manuellement, orientée radialement, venu de fabrication avec la bague et donc monolithique.

8. Potence (10) pour cintre de vélo selon l'une des revendications 1 à 4, **caractérisée en ce que** le capot (162) comprend deux fenêtres (163) à travers lesquelles passent deux boutons poussoirs (165), ces deux boutons poussoirs (165) étant reliés par un anneau déformable (167) assurant la mise en saillie desdits boutons poussoirs.

9. Potence (10) pour cintre de vélo selon la revendication 8, **caractérisée en ce que** le capot (162) comprend des butées (169) solidaires du bouton poussoir, interdisant la manoeuvre en translation verticale et autorisant le déplacement en translation verticale lorsque les boutons poussoirs (165) sont radialement rapprochés.

10. Potence (10) pour cintre de vélo selon l'une des revendications 1 à 4, 8 et 9, **caractérisée en ce que** la au moins une clavette (156) comprend un chanfrein (160-1) supérieur, de façon que lors des mouvements de translation verticale du capot (162) la au moins une clavette (156) s'escamote dans son logement (154) dans le corps (124) de potence.

11. Potence (10) pour cintre de vélo selon l'une des revendications 1 à 4, 8, 9 et 10, **caractérisée en ce que** le capot (162) comprend des équipements complémentaires comme des accessoires électroniques.

## Patentansprüche

1. Vorbau (10) für einen Fahrradlenker mit kontrollierter Freigabe seiner Lenkbarkeit um die Lenkdrehachse mit einem Grundkörper (24, 124), der dazu bestimmt ist, einen Vorbauarm (12, 112) aufzunehmen, der selbst einen Lenker aufnimmt, wobei der Vorbau weiterhin einen Vorbaukopf (40, 140), Befestigungsmittel (14, 114) des Vorbaus (10) am Gabelrohr (16, 116) eines Fahrrads aufweist, das über eine Lenkhülse und Mittel (18, 118) zum Verriegeln/Entriegeln verfügt, wobei die Mittel (18, 118) zum Verriegeln/Entriegeln wenigstens einen Federkeil (56, 156) aufweisen, der in einer Aufnahme (54, 154) angeordnet ist, der im Vorbaukopf (40, 140) ausgebildet ist, wobei die Aufnahme mit einer bezüglich der längs verlaufenden Lenkdrehachse exzentrischen Längsachse versehen ist, **dadurch gekennzeichnet, dass** die Mittel zum Verriegeln/Entriegeln Mittel (58, 158) für ein elastisches Rückstellen des wenigstens einen Federkeils aus der Aufnahme heraus aufweist und wenigstens eine Öffnung (36, 136) aufweist, die in dem Grundkörper (24, 124) des Vorbaus ausgebildet und die bezüglich der längs verlaufenden Drehachse radial angeordnet ist, wobei der wenigstens eine Federkeil durch die wenigstens eine Öffnung verläuft und ein Ring (62) oder eine Abdeckung (162) es gestattet, den wenigstens einen Federkeil (56, 156) durch die wenigstens eine Öffnung (36, 136) mittels jeweils einer Dreh- oder Translationsbewegung einzuziehen.

2. Vorbau (10) für einen Fahrradlenker nach Anspruch 1, **dadurch gekennzeichnet, dass** die Aufnahmen (54, 154) vier an der Zahl sind.

3. Vorbau (10) für einen Fahrradlenker nach Anspruch 1 oder 2, **dadurch gekennzeichnet, dass** der Vorbaukopf (40) eine Stange (44) und einen Keil (52) mit einer Schraube (48) zu dessen Befestigung in dem Gabelrohr (16) aufweist.

4. Vorbau (10) für einen Fahrradlenker nach Anspruch 1 oder 2, **dadurch gekennzeichnet, dass** der Kopf (140) einen Kern (152) mit einer Schraube (148) zu dessen Befestigung in dem Gabelrohr (116) aufweist.

5. Vorbau (10) für einen Fahrradlenker nach einem der Ansprüche 1 bis 3, **dadurch gekennzeichnet, dass** der Ring (62) Einzüge (72) aufweist, die dazu vorgesehen sind, die Federkeile (56) in bestimmten vorgegebenen Winkelstellungen aufzunehmen.

6. Vorbau (10) für einen Fahrradlenker nach einem der Ansprüche 1 bis 3 und 5, **dadurch gekennzeichnet, dass** der Ring (62) eine teilweise umfängliche Nut (68) aufweist, die dazu vorgesehen ist, ein elastisches Rückstellelement (70), wie zum Beispiel einen Reif aus Elastomer, aufzunehmen.

7. Vorbau (10) für einen Fahrradlenker nach einem der Ansprüche 1 bis 3, 5 und 6, **dadurch gekennzeichnet, dass** der Ring (62) einen von Hand betätigbaren Stellhebel (74) aufweist, der in radiale Richtung ausgerichtet ist und zusammen mit dem Ring hergestellt und damit einstückig ist.

8. Vorbau (10) für einen Fahrradlenker nach einem der Ansprüche 1 bis 4, **dadurch gekennzeichnet, dass** die Abdeckung (162) zwei Fenster (163) aufweist, durch die zwei Druckknöpfe (165) verlaufen, wobei die beiden Druckknöpfe (165) durch einen verformbaren Ring (167) verbunden sind, der das Vorstehen der Druckknöpfe sicherstellt.

9. Vorbau (10) für einen Fahrradlenker nach Anspruch 8, **dadurch gekennzeichnet, dass** die Abdeckung (162) an dem Druckknopf angebrachte Anschläge (169) aufweist, die eine Betätigung mit einer vertikalen Translationsbewegung verhindern und ein Verschieben mit einer vertikalen Translationsbewegung gestatten, wenn die Druckknöpfe (165) in radiale Richtung angenähert sind.

10. Vorbau (10) für einen Fahrradlenker nach einem der Ansprüche 1 bis 4, 8 und 9, **dadurch gekennzeichnet, dass** der wenigstens eine Federkeil (156) eine obere Abschrägung (160-1) aufweist, sodass bei einer vertikalen Translationsbewegung der Abdeckung (162) der wenigstens eine Federkeil (156) in seine Aufnahme (154) im Grundkörper (124) des Vorbaus eingezogen wird.

11. Vorbau (10) für einen Fahrradlenker nach einem der Ansprüche 1 bis 4, 8, 9 und 10, **dadurch gekennzeichnet, dass** die Abdeckung (162) ergänzende Geräte wie elektronisches Zubehör aufweist.

## Claims

1. A stem (10) for a bicycle handlebar with controlled release of the steerability thereof about the rotation axis of the steering, comprising a body (24, 124) intended to receive a stem arm (12, 112) itself receiving a handlebar, said stem further comprising a stem head (40, 140), means (14, 114) for securing said stem (10) to the fork tube (16, 116) of a bicycle comprising a steering socket and locking/unlocking means (18, 118), wherein the locking/unlocking means (18, 118) comprises at least one key (56, 156) arranged in a recess (54, 154) provided in the stem head (40, 140), said recess being provided with a longitudinal axis off-centre with respect to the longitudinal rotation axis of the steering, **characterised in that** the locking/unlocking means comprises means (58, 158) for the elastic return of this at least one key towards the outside of said recess, at least one aperture (36, 136) provided in the stem body (24, 124), oriented radially with respect to the longitudinal rotation axis, the at least one key passing through the at least one aperture, a ring (62) or a cap (162) permitting retraction of the at least one key (56, 156) through the at least one said aperture (36, 136) by a respective rotation or translation movement.

2. The stem (10) for a bicycle handlebar according to claim 1, **characterised in that** the recesses (54, 154) are four in number.

3. The stem (10) for a bicycle handlebar according to claim 1 or 2, **characterised in that** the stem head (40) comprises a pole (44) and a wedge (52) with a screw (48) for fixing thereof in the fork tube (16) .

4. The stem (10) for a bicycle handlebar according to claim 1 or 2, **characterised in that** the head (140) comprises a core (152) with a screw (148) for fixing thereof in the fork tube (116).

5. The stem (10) for a bicycle handlebar according to any of claims 1 to 3, **characterised in that** the ring (62) comprises projections (72) intended to receive the keys (56) in certain given angular positions.

6. The stem (10) for a bicycle handlebar according to any of claims 1 to 3 or 5, **characterised in that** the ring (62) comprises a partially circumferential groove (68) intended to receive an elastic return element (70) such as an elastomer spring ring.

7. The stem (10) for a bicycle handlebar according to any of claims 1 to 3, 5 or 6, **characterised in that** the ring (62) comprises a manually actuatable manoeuvring lever (74), oriented radially, manufactured at the same time as the ring and therefore in one piece.

8. The stem (10) for a bicycle handlebar according to any of claims 1 to 4, **characterised in that** the cap (162) comprises two windows (163) through which two push buttons (165) pass, these two push buttons (165) being connected by a deformable annulus (167) ensuring that said push buttons project.

9. The stem (10) for a bicycle handlebar according to claim 8, **characterised in that** the cap (162) comprises stops (169) secured to the push button, preventing vertical translation manoeuvring and allowing vertical translation movement when the push buttons (165) are brought radially together.

10. The stem (10) for a bicycle handlebar according to any of claims 1 to 4, 8 or 9, **characterised in that** the at least one key (156) comprises a top bevel (160-1) so that, during vertical translation movements of the cap (162), the at least one key (156) retracts into its recess (154) in the stem body (124).

11. The stem (10) for a bicycle handlebar according to any of claims 1 to 4, 8, 9 or 10, **characterised in that** the cap (162) comprises supplementary equipment such as electronic accessories.
